Europäisches Patentamt

European Patent Office

Office européen des brevets

(11) Veröffentlichungsnummer : **0 095 056**
**B1**

(12) # EUROPÄISCHE PATENTSCHRIFT

(45) Veröffentlichungstag der Patentschrift :
21.01.87

(51) Int. Cl.⁴ : **B 23 K 9/09**, G 05 F 1/08

(21) Anmeldenummer : 83104211.4

(22) Anmeldetag : 29.04.83

(54) **Verfahren und Einrichtung zum Metallichtbogenschweissen.**

(30) Priorität : 26.05.82 DE 3219726

(43) Veröffentlichungstag der Anmeldung :
30.11.83 Patentblatt 83/48

(45) Bekanntmachung des Hinweises auf die Patenterteilung : 21.01.87 Patentblatt 87/04

(84) Benannte Vertragsstaaten :
AT BE CH DE FR GB IT LI LU NL SE

(56) Entgegenhaltungen :
EP-A- 0 043 588
WO-A-81 /013 83
DE-B- 1 690 561
US-A- 4 301 355

(73) Patentinhaber : UNIVERSAL TIEFPUNKT Schweissmaterial GmbH & Co.
Elsässer Strasse 10
D-7812 Bad Krozingen 2 (DE)

(72) Erfinder : Bodewig, Peter W.
Goldregenweg 6
D-4030 Ratingen (DE)

(74) Vertreter : Ratzel, Gerhard, Dr.
Seckenheimer Strasse 36a
D-6800 Mannheim 1 (DE)

## Beschreibung

Die Erfindung betrifft ein Verfahren zum Metalllichtbogenschweißen, bei dem einer abschmelzenden Elektrode ein pulsierender Strom zuführbar ist, der zwischen einem Schweißstrom mit maximaler Stromstärke zum Abschmelzen der Elektrode und einem Pausenstrom mit niedriger Stromstärke zum Aufrechterhalten eines Lichtbogens umschaltbar ist, wobei die Umschaltung in Abhängigkeit der Lichtbogenspannung und einer oberen Referenzspannung erfolgt.

Aus der US-A-43 01 355 ist ein derartiges Verfahren sowie eine Einrichtung zur Durchführung dieses Verfahrens bekannt. Es sind hierbei zwei Betriebsarten einstellbar, wobei in der einen Betriebsart in Abhängigkeit der Lichtbogenspannung die Zuführungsgeschwindigkeit der Elektrode geregelt wird ; die Stromquelle wird in Abhängigkeit des Stromsignales geregelt, wobei eine Modulation der Pulsbreite vorgenommen wird. In der anderen Betriebsart wird auf Konstantspannung geregelt, wobei eine konstante Zuführungsgeschwindigkeit der Elektrode vorgegeben wird. Die Lichtbogenspannung wird mit einer einzigen Referenzspannung verglichen, um entsprechend dem Differenzsignal die Pulsbreite des Stromimpulses zu beeinflussen. Der Schweißstrom wird seinerseits mit einer hohen Frequenzgetaktet, und sowohl für die Schweißstromquelle als auch für die Einheit zur Pulsbreitenmodulation ist ein nicht unerheblicher Schaltungsaufwand erforderlich. Die Einstellung der Kennlinien, die Vorgabe der Takt- sowie Pulsfrequenzen unter Berücksichtigung der verschiedenen Schweißparameter erfordert in der Praxis einen nicht unerheblichen Aufwand und das Bedienungspersonal muß über entsprechende Fachkenntnisse verfügen.

Ferner ist aus der EP-A-43 588 eine Einrichtung beschrieben, gemäß welcher die Abschmelzgeschwindigkeit einer Elektrode dadurch kontrolliert wird, daß der Stromimpuls in seiner Länge und Amplitude und darüberhinaus auch die Stärke eines Grundstromes variiert werden. Für die Lichtbogenspannung wird ein einziger Referenzwert vorgegeben, der in einem Komparator mit der Lichtbogenspannung verglichen wird. Diesem Komparator ist eine Einheit zur Erzeugung einer vorgebbaren Kennlinie nachgeschaltet, um dem Differenzsignal aus Lichtbogenspannung und Referenzspannung ein in vorgebbarer Weise abhängiges Ausgangssignal zuzuordnen. Auch bei dieser bekannten Einrichtung erfolgt eine Pulsbreitenregelung, wobei ein vergleichsweise großer Shaltungsaufwand erforderlich ist.

Der Erfindung liegt die Aufgabe zugrunde, das Verfahren der eingangs genannten Art dahingehend weiterzubilden, daß mit einem geringen Schaltungsaufwand bei einfacher Bedienbarkeit ein ordnungsgemäßer Tropfenübergang sichergestellt werden kann.

Diese Aufgabe wird erfindungsgemäß dadurch gelöst, daß zusätzlich eine untere Referenzspannung vorgebbar ist, wobei auf den konstanten Schweißstrom bei Erreichen der unteren Referenzspannung und auf den Pausenstrom bei Erreichen der oberen Referenzspannung von der Lichtbogenspannung umgeschaltet wird.

Mit dem erfindungsgemäßen Verfahren wird unter Einsatz einer mit geringem Schaltungsaufwand zu realisierenden Stromquelle eine sichere Tropfenbildung gewährleistet. Die stromproportionale Lichtbogenspannung wird für die Regelung als Ist-Wert herangezogen, wobei die beiden Referenzspannungen den jeweiligen Schweißbedingungen entsprechend unabhängig voneinander in einfacher Weise einstellbar sind. Die Lichtbogenspannung wird sowohl zum Einschalten als auch zum Ausschalten der höheren Stromstärke gemessen und mit der jeweiligen Referenzspannung verglichen. Da die Lichtbogenspannung gemessen wird, wird auch der von der Nachführungsgeschwindigkeit bestimmte Abstand der Elektrode zum Werkstück automatisch berücksichtigt. Zwischen Lichtbogen und Stromquelle ist ein geschlossener Regelkreis vorhanden, und es ist somit immer gewährleistet, daß der Impuls dann eingeleitet wird, wenn der Lichtbogen ihn anfordert, und daß der Impuls genau zu dem Zeitpunkt wieder ausgeschaltet wird, wenn ein Tropfenübergang erfolgt ist. Aufgrund der Einstellbarkeit nicht nur der oberen Referenzspannung sondern auch der unteren Referenzspannung entfällt insoweit eine Totzeit im regelungstechnischen Sinne. Es wird keine von der Schaltung her aufwendige Stromquelle für hohe Schaltfrequenzen vorausgesetzt, sondern es genügt eine mit geringem Schaltungsaufwand aufzubauende, umschaltbare Konstantstromquelle. Das Verfahren ist nicht nur für einen maschinellen Elektrodenvorschub, sondern auch für die Nachführung der Elektrode von Hand problemlos anwendbar. Der Lichtbogen ist richtungsstabil und die Parametereinstellung für den Schweißstrom, Pausenstrom, untere und obere Referenzspannung sowie Vorschubgeschwindigkeit der Elektrode, ist für die jeweiligen Schweißqualitäten leicht reproduzierbar. Über die Vorschubgeschwindigkeit kann der Schweißvorgang weitgehend beeinflußt werden. Die sonst sehr nachteilige bekannte Kraterbildung am Ende eines Schweißvorganges läßt sich besonders leicht dadurch vermeiden, daß die Vorschubgeschwindigkeit der Elektrode in einer vorwählbaren Zeit bis auf Null vermindert wird. Bei dieser Verminderung findet eine allmähliche Verkleinerung der Hochstromphasen und eine Vergrößerung der Pausenstromphasen statt.

Die Nachführgeschwindigkeit der Elektrode ist mit der von der Stromzufuhr abhängigen Abschmelzgeschwindigkeit der Elektrode zu koordinieren. Während der Impulse ist die Abschmelzgeschwindigkeit größer als die Nachführgeschwindigkeit der Elektrode, so daß sich der Abstand zwischen Werkstück und Elektrodenspitze vergrößert. Während der Impulspausen kann zwar die Stromstärke auf einen Betrag eingestellt werden, bei dem noch ein Abschmelzen erfolgt, doch muß die Abschmelzgeschwindigkeit kleiner als die Zufuhrgeschwindigkeit sein. Um die Aufrechterhaltung des Lichtbogens aber sicher zu gewährleisten, wird bevorzugt die niedrigere Stromstärke so gewählt, daß bei ihr kein Abschmelzen der Elektrode erfolgt. Durch Vorgabe der Vorschubgeschwindigkeit und der Stromstärke lassen sich die Pulsfrequenz und damit auch die Schweißverhältnisse ohne Schwierigkeiten verändern bzw. beeinflussen.

Die Erfindung bezieht sich ferner auf eine Einrichtung zum Metallichtbogenschweißen mit einer nachgeführten, abschmelzenden Elektrode, der ein Strom von einer Stromquelle zugeführt wird, die zwischen einer höheren und einer niedrigeren Stromstärke umgeschaltet werden kann, wobei der Strom auf die höhere Stromstärke umgeschaltet wird, wenn die Lichtbogenspannung eine untere Referenzspannung erreicht, und wobei für das Umschalten des Stromes auf die niedrigere Stromstärke ein Referenzwert vorgegeben ist. Diese Einrichtung soll bei einem funktionsgerechten Aufbau in zuverlässiger Weise die mit dem oben erläuterten Verfahren erzielten Wirkungen und Vorteile gewährleisten. Hierzu wird vorgeschlagen, daß ein weiterer Komparator vorgesehen ist, mit welchem die Lichtbogenspannung mit einer unteren Referenzspannung verglichen wird, und daß beim Ansprechen des Komparators für die untere Referenzspannung die Stromquelle auf den Schweißstrom und bei Ansprechen des Komparators für die obere Referenzspannung die Stromquelle auf den Pausenstrom umgeschaltet wird.

Eine bevorzugte Ausführungsform ist dadurch gekennzeichnet, daß die Ausgänge der Komparatoren, an deren invertierenden Eingängen jeweils ein Spannungsteiler liegt, denen jeweils einerseits der Lichtbogenspannung und andererseits eine der beiden Referenzspannungen aufgegeben sind, über umgekehrt gepolte Dioden am Eingang eines bistabilen Umschalters für die Konstantstromquelle liegen. Die Konstantstromquelle kann eine transistorisierte oder thyristorisierte Stromquelle mit dynamischer Stromspannungskennlinie sein. Als Konstantstromquelle kann aber auch eine herkömmliche Stromquelle mit statischer Stromspannungskennlinie verwendet werden, wobei dann zum Umschalten von Schweißstrom auf den Pausenstrom ein elektronischer Schalter mit Nebenwiderstand vorgesehen wird.

Die Schweißeigenschaften können durch Verändern verschiedener Parameter beeinflußt werden. Zu diesem Zweck ist die Vorschubgeschwindigkeit der Nachführeinrichtung für die Elektrode einstellbar. Wird beispielsweise die Vorschubgeschwindigkeit erhöht, so vermindert sich die Zeit der Impulspausen, während sich die Zeit der Impulse verlängert.

Durch Verändern der Referenzspannungen läßt sich die Lichtbogenlänge verändern.

Die Impulsfrequenz läßt sich durch Verändern der Stromstärke für Impulsstrom und Pausenstrom verändern.

Im folgenden wird die Erfindung anhand einer Zeichnung näher erläutert. Im einzelnen zeigen :

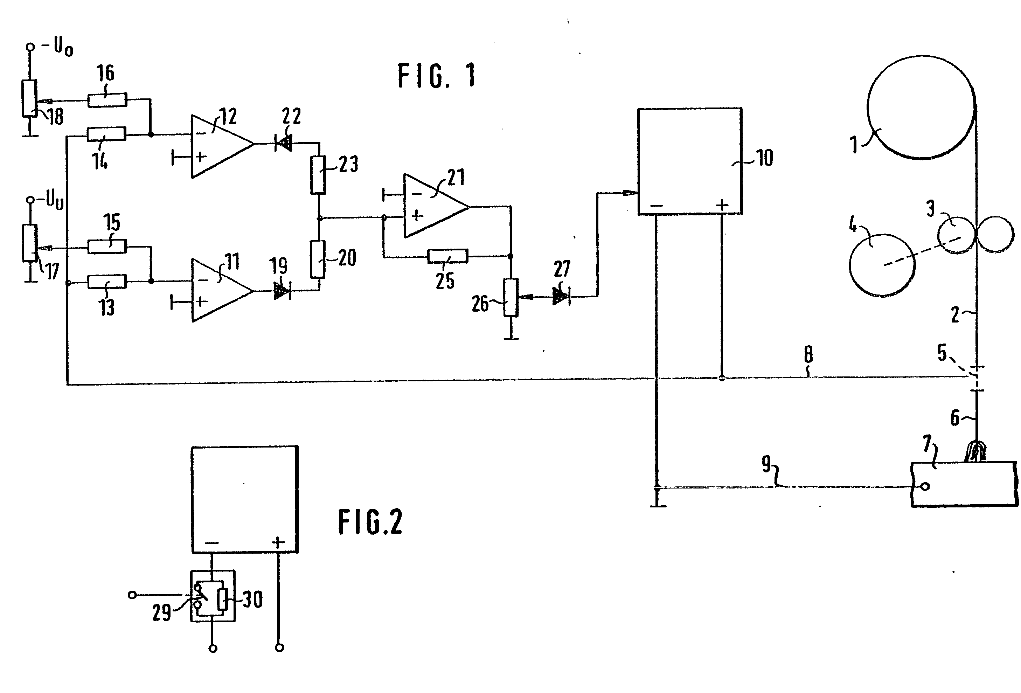

Figur 1 die Einrichtung zum Metallichtbogenschweißen in schematischer Darstellung,

Figur 2 eine zur Konstantstromquelle der Einrichtung der Fig. 1 abgewandelte Konstantstromquelle,

Figuren 3-6 verschiedene Strom- und Spannungsdiagramme für den Lichtbogen.

Von einer Drahtrolle 1 wird Schweißdraht 2 mittels einer aus Vorschubrollen 3 und Antriebsmotor 4 bestehenden Nachführeinrichtung einem Schweißbrenner 5 zugeführt, aus dem das Ende des Schweißdrahtes 2 als Elektrode 6 herausragt. Der Schweißbrenner 5 und ein zu schweißendes Werkstück 7 sind über Versorgungsleitungen 8, 9 an eine Konstantstromquelle 10 angeschlossen. Die Konstantstromquelle 10 läßt sich auf zwei konstante Ausgangsströme umschalten. Wie später noch anhand der Impulsdiagramme zu erläutern sein wird, läßt sich sowohl die untere als auch die obere Stromstärke auf verschiedene Werte einstellen. Die Konstantstromquelle 10 sollte eine dynamische Stromspannungskennlinie haben und transistoriert oder thyristoriert sein, damit ihr Ausgangsstrom schnell genug zwischen Impulsstrom und Pausenstrom umgeschaltet werden kann.

Der Konstantstromquelle 10 ist eine Regeleinrichtung zugeordnet. Die Regeleinrichtung besteht aus zwei parallel geschalteten Komparatoren 11, 12, an deren invertierenden Eingängen über Widerstände 13, 14 die Lichtbogenspannung und die über Widerstände 15, 16 an einem Potentiometer 17, 18 einstellbare untere und obere Referenzspannung $U_{uref}$, $U_{oref}$ anliegen. Der Ausgang des Komparators 11 ist über eine positiv gepolte Diode 19 und einen Widerstand 20 mit dem nicht invertierenden Eingang eines Operationsverstärkers 21 verbunden, während der Ausgang des Komparators 12 über eine negativ gepolte Diode 22 und einen Widerstand 23 mit dem nicht invertierenden Eingang des Operationsverstärkers 21 verbunden ist. Der Ausgang des Operationsverstärkers 21 ist über einen Widerstand 25 mit dem nicht invertierenden Eingang gekoppelt, so daß der Operationsverstärker 21 als bistabiler Schalter wirkt. Der Ausgang des Operationsverstärkers 21 ist über ein einstellbares Potentiometer und eine positiv gepolte Diode 27 mit dem Sollwert-Eingang der Konstantstromquelle 10 verbunden.

Diese Ausführung der Einrichtung zum Metallichtbogenschweißen kann dadurch abgewandelt werden, daß eine herkömmliche Konstantstromquelle 28 mit statischer Stromspannungskennlinie, zum Beispiel eine Konstantstromquelle mit Transduktor verwendet wird, die auf den maximalen Schweißstrom einstellbar ist. Zur Verminderung des Stromes auf den Pausenstrom ist in der Stromversorgungsleitung 9 ein elektronischerSchalter 29 mit einem Nebenwiderstand 30 vorgesehen, der von dem Operationsverstärker 21 angesteuert wird. Solange der elektronische Schalter geschlossen ist, fließt der maximale Ausgangsstrom, während bei geöffnetem Schalter 29 der Nebenwiderstand 30 nur den Pausenstrom durchläßt.

Die beschriebene Einrichtung arbeitet auf folgende Art und Weise :

Nach Zünden des Lichtbogens, sei es durch Kontakt, sei es durch einen Hochfrequenzimpuls bei minimalem Abstand der Elektrode 6 vom Werkstück 7, ist die Lichtbogenspannung kleiner als die am Potentiometer 17 eingestellte untere Referenzspannung. Der Komparator 11 stellt deshalb ein negatives Signal an seinem Eingang fest. Dieses Signal wird invertiert, so daß es sowohl die Diode 19 als auch über den nichtinvertierenden Eingang des Operationsverstärkers 21 passiert. Am Potentiometer 26 fällt deshalb ein positiver Spannungswert ab, der als Steuersignal für maximalen Schweißstrom über die Diode 27 auf den Sollwert-Eingang der Konstantstromquelle 10 gelangt. Die Konstantstromquelle 10 wird deshalb auf Hochstrom geschaltet. Bei diesem Hochstrom schmilzt die Elektrode 6 ab. Die Vorschubgeschwindigkeit der Nachführeinrichtung 3, 4 ist derart eingestellt, daß die Abschmelzgeschwindigkeit größer als die Vorschubgeschwindigkeit ist. Deshalb vergrößert sich die Länge des Lichtbogens und damit auch die Lichtbogenspannung.

Ein Ansteigen der Lichtbogenspannung über die untere Referenzspannung ändert am Schaltzustand des mitgekoppelten Operationsverstärkers 21 nichts, weil das nach Invertieren durch den Komparator 11 negative Signal von der Diode 19 abgeblockt wird. Folglich liegt am Sollwert-Eingang der Konstantstromquelle 10 weiter das positive Ausgangssignal des Operationsverstärkers 21 an.

Sobald die Lichtbogenspannung die obere Referenzspannung $U_{oref}$ überschreitet, gelangt durch die Invertierung des Komparators 12 und über die Diode 22 ein negatives Signal zum Operationsverstärker 21, wodurch dieser umgeschaltet wird. Das negative Signal am Ausgang des Operationsverstärkers 21 wird durch die Diode 27 vom Sollwert-Eingang der Konstantstromquelle 11 abgeblockt. Die Konstantstromquelle erhält dann nicht länger ein Signal für Hochstrom, so daß sie auf den minimalen Strom (Pausenstrom) umschaltet. Diese Verminderung des Stromes hat zur Folge, daß das Abschmelzen der Elektrode 6 stark vermindert oder sogar ganz gestoppt wird. Da die Stromzufuhr aber nicht völlig gestoppt wird, sondern aufrecht erhalten wird, erlischt der Lichtbogen nicht. Die Spitze der Elektrode nähert sich dem Werkstück, so daß die Lichtbogenspannung sich vermindert. Der Schaltzustand des Operationsverstärkers 21 bleibt in dieser Zeit unverändert, weil die Diode 22 das nach Invertieren durch den Komparator 12 positive Signal vom Eingang des Operationsverstärkers 21 abblockt. Sobald die Elektrode sich dem Werkstück 7 so weit genähert hat, daß die Lichtbogenspannung auf den Wert der unteren Referenzspannung $U_{uref}$ abgefallen ist, findet, wie oben beschrieben, die Umschaltung auf Hochstrom statt, so daß ein erneutes Abschmelzen der Elektrode mit sich vergrößerndem Abstand der Elektrodenspitze vom Werkstück beginnt.

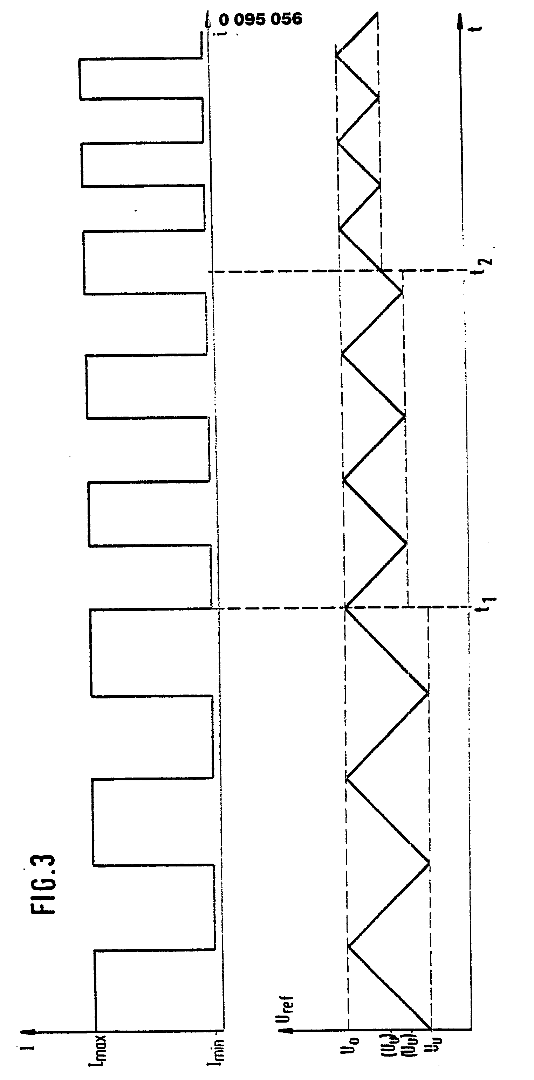

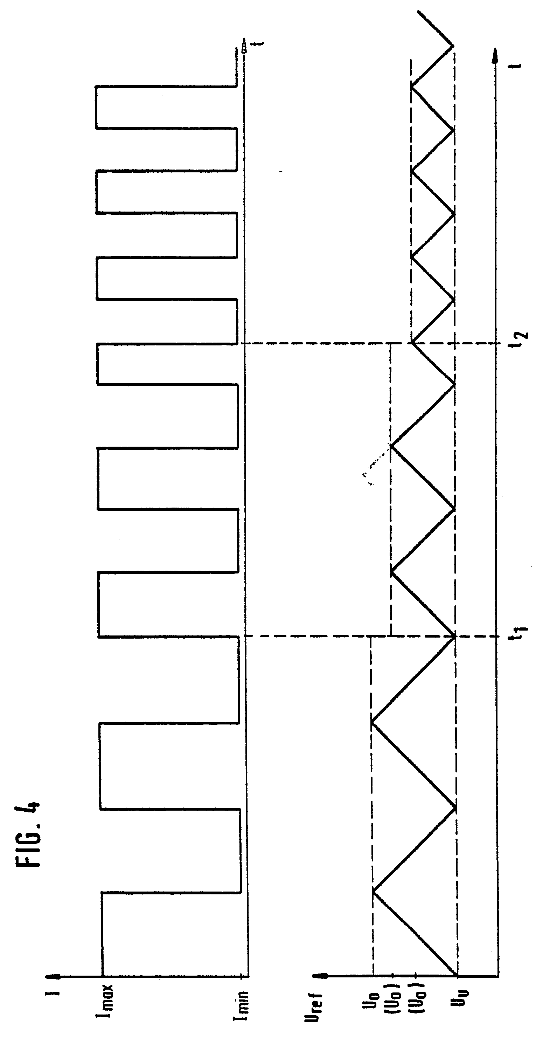

Die maximale Stromstärke und die Vorschubgeschwindigkeit des Schweißdrahtes lassen sich so aufeinander abstimmen, daß die Impulsdauer gleich den Impulspausen ist. Eine solche Einstellung liegt den Diagrammen der Fig. 3 und 4 zugrunde. Bei den Diagrammen der Fig. 3 und 4 ist zu den Zeitpunkten T1, T2 die untere Referenzspannung $U_{uref}$ angehoben, bzw. die obere Referenzspannung $U_{oref}$ abgesenkt worden. Sowohl mit der Veränderung der unteren Referenzspannung als auch der Änderung der oberen Referenzspannung kann die Lichtbogenlänge beeinflußt werden. Mit der Änderung der Referenzspannungen ist auch eine Änderung der Impulsfrequenz verbunden, wie die Diagramme zeigen. Man sieht, daß sich dadurch die Impulsfrequenz ändert.

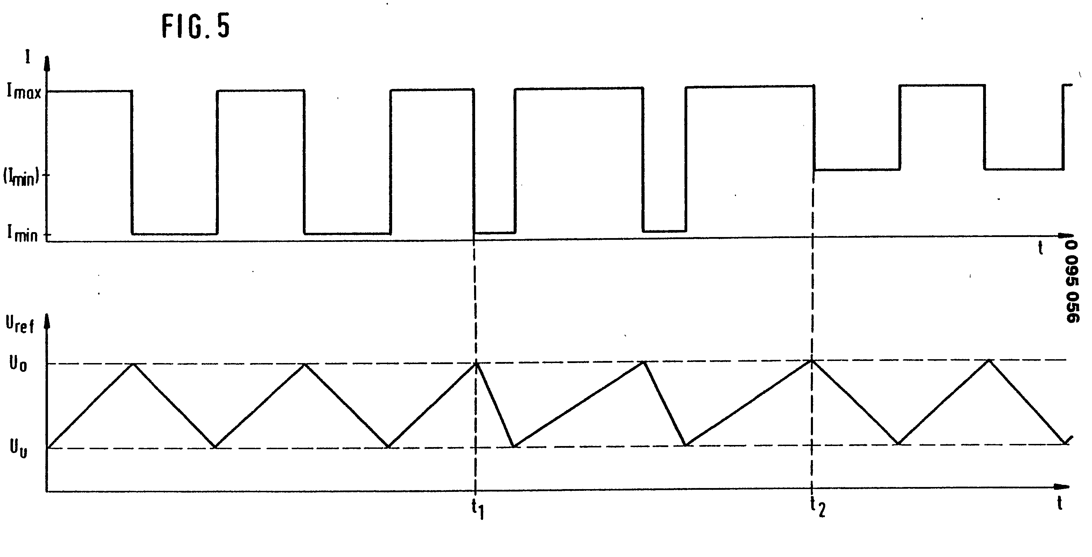

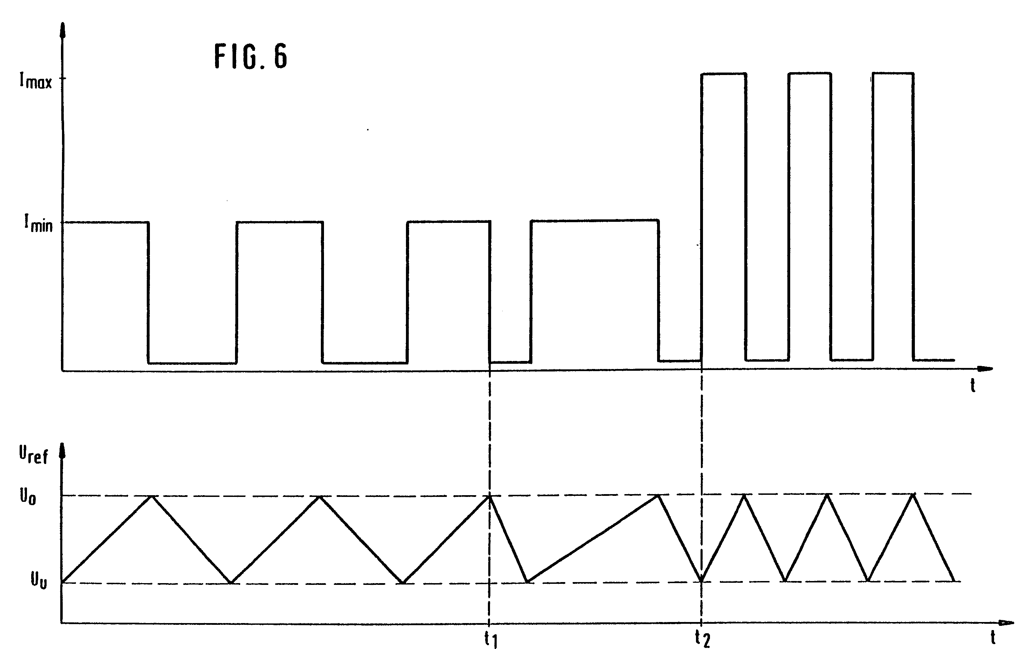

Bei den Diagrammen der Figuren 5 und 6 ist zum Zeitpunkt T1 die Vorschubgeschwindigkeit des Schweißdrahtes erhöht worden. Dies führt zu einer Verkürzung der Strompausen und zu einer Verlängerung der Impulsdauer. Wird nun entsprechend dem Diagramm der Fig. 5 der Pausenstrom derart angehoben, daß auch während der Impulspausen ein Abschmelzen der Elektrode, allerdings mit verminderter Rate, erfolgt, dann wird die Pause verlängert. Wird dagegen zum Zeitpunkt T2 unter Beibehaltung der zum Zeitpunkt T1 erhöhten Vorschubgeschwindigkeit der Impulsstrom erhöht, dann führt das zu einer Verkürzung des Impulses, wie in Fig. 6 dargestellt.

Über die Vorschubgeschwindigkeit, die untere und obere Referenzspannung und die Stromstärke des Impulsstromes und des Pausenstromes, lassen sich also die Betriebsverhältnisse auf verschiedene Art und Weise variieren, so daß es möglich ist, für die jeweilige Schweißaufgabe die optimalen Verhältnisse einzustellen. Aus den Diagrammen kann aber auch abgeleitet werden, daß Änderungen in der Vorschubgeschwindigkeit der Elektrode, wie sie bei der Führung der Elektrode von Hand kaum zu vermeiden sind, sich nur in einer Verkürzung oder Verlängerung der Impulse bzw. Pausen auswirken. Sowohl das Erlöschen des Lichtbogens als auch ein unerwünschter Kontakt und damit Kurzschluß, werden durch das Umschalten des Konstantstromes zwischen maximalem Strom und minimalem Strom sicher verhindert. Das erfindungsgemäße Verfahren bringt deshalb Vorteile in der Schweißqualität und Schweißgeschwindigkeit.

Das Verfahren ist nicht an ein bestimmtes Lichtbogenschweißverfahren gebunden. Es kann als MIG- oder MAG- Schweißverfahren, aber auch als Unterpulverschweißverfahren, durchgeführt werden.

**Patentansprüche**

1. Verfahren zum Metallichtbogenschweißen, bei dem einer abschmelzenden Elektrode (6) ein pulsierender Strom zuführbar ist, der zwischen einem Schweißstrom (I max) mit maximaler Stromstärke zum Abschmelzen der Elektrode (6) und einem Pausenstrom (I min) mit niedriger Stromstärke zum Aufrechterhalten eines Lichtbogens umschaltbar ist, wobei die Umschaltung in Abhängigkeit der Lichtbogenspannung und einer oberen Referenzspannung ($U_{oref}$) erfolgt, dadurch gekennzeichnet, daß zusätzlich eine untere Referenzspannung ($U_{uref}$) vorgebbar ist, wobei auf den konstanten Schweißstrom (I max) bei Erreichen der unteren Referenzspannung ($U_{uref}$) und auf den Pausenstrom (I min) bei Erreichen der oberen Referenzspannung ($U_{oref}$) von der Lichtbogenspannung umgeschaltet wird.

2. Verfahren nach Anspruch 1, dadurch gekennzeichnet, daß der Pausenstrom (I min) auf eine Stromskärke eingestellt wird, bei welcher kein Abschmelzen erfolgt.

3. Einrichtung zum Metallichtbogenschweißen mit einer abschmelzenden, insbesondere mit konstantem Vorschub, nachgeführten Elektrode, mit einer Konstantstromquelle, die zwischen einem Schweißstrom (I max) mit hoher Stromstärke zum Abschmelzen der Elektrode (6) und einem Pausenstrom (I min) mit niedriger Stromstärke zum Aufrechterhalten des Lichtbogens umschaltbar ist, mit einer Regeleinrichtung, der das Signal eines Komparators zuführbar ist, mit welchem die Lichtbogenspannung mit einer oberen Referenzspannung ($U_{oref}$) verglichen wird, dadurch gekennzeichnet, daß ein weiterer Komparator (11) vorgesehen ist, mit welchem die Lichtbogenspannung mit einer unteren Referenzspannung ($U_{uref}$) verglichen wird, und daß beim Ansprechen des Komparators (11) für die untere Referenzspannung ($U_{uref}$) die Stromquelle auf den Schweißstrom (I max) und bei Ansprechen des Komparators (12) für die obere Referenzspannung ($U_{oref}$) die Stromquelle auf den Pausenstrom (I min) umgeschaltet wird.

4. Einrichtung nach Anspruch 3, dadurch gekennzeichnet, daß die Ausgänge der Komparatoren (11, 12), an deren invertierenden Eingängen jeweils ein Spannungsteiler liegt, denen jeweils einerseits die Lichtbogenspannung und andererseits eine der beiden Referenzspannungen ($U_{uref}$, $U_{oref}$) aufgegeben sind, über umgekehrt gepolte Dioden (19, 22) am Eingang eines bistabilen Umschalters (21, 25) für die Konstantstromquelle (10, 28) liegen.

5. Einrichtung nach Anspruch 3 oder 4, dadurch gekennzeichnet, daß die Konstantstromquelle (28) eine Stromquelle mit statischer Stromspannungskennlinie ist, wobei ein elektronischer Schalter (29) mit einem Nebenwiderstand (30) in der Stromzufuhrleitung zum Schweißbrenner (5) vorgesehen ist.

6. Einrichtung nach einem der Ansprüche 3 bis 5, dadurch gekennzeichnet, daß die beiden Referenzspannungen ($U_{uref}$, $U_{oref}$) mittels Potentiometern (17, 18) unabhängig voneinander einstellbar sind.

**Claims**

1. A method for metal arc welding, wherein a pulsating current is supplied to a melting electrode (6) and is switched between a welding current (I max) with maximum current intensity for melting the electrode (6) and a dwell current (I min) with low current intensity for maintaining an arc, the switching-over being carried out as a function of the arc voltage and a upper reference voltage ($U_{oref}$), characterised in that additionally a lower reference voltage ($U_{uref}$) is determined, whereupon switching over to the constant welding current (I max) takes place when the arc voltage reaches the lower reference voltage ($U_{uref}$) and to the dwell current (I min) when it reaches the upper reference voltage ($U_{oref}$).

2. A method according to Claim 1, characterised in that the dwell current (I min) is set to a current intensity at which no melting takes place.

3. A device for metal arc welding, with a melting electrode, in particular with a constant feed, with a constant current source which can be switched between a welding current (I max) with high current intensity for melting the electrode (6) and a dwell current (I min) with low current intensity for maintaining the arc, with a control means to which can be supplied the signal from a comparator by means of which the arc voltage is compared to an upper reference voltage ($U_{oref}$), characterised in that another comparator (11) is provided, by means of which the arc voltage is compared to a lower reference voltage ($U_{uref}$), and in that when the comparator (11) for the lower reference voltage ($U_{uref}$) responds the current source is switched to the welding current (I max) and when the comparator (12) for the upper reference voltage ($U_{oref}$) responds the current source is switched to the dwell current (I min).

4. A device according to Claim 3, characterised in that the outputs of the comparators (11, 12), to the inverting inputs of each of which a voltage divider is respectively applied, to each of which voltage dividers there is respectively fed, on the one hand, the arc voltage and, on the other hand, one of the two reference voltages ($U_{uref}$, $U_{oref}$), are applied *via* respective diodes (19, 22) of opposite polarity to the input of a bistable change-over switch (21, 25) for the constant current source (10, 28).

5. A device according to Claim 3 or 4, characterised in that the constant current source (28) is a current source with static current-voltage characteristic, an electronic switch (29) with a shunt resistance (30) being provided in the current supply lead to the welding torch (5).

6. A device according to any of Claims 3 to 5, characterised in that the two reference voltages ($U_{uref}$, $U_{oref}$) can be adjusted independently of one another by means of potentiometers (17, 18).

## Revendications

1. Procédé de soudage métallique à l'arc électrique, dans lequel on peut appliquer à une électrode fusible (6) un courant pulsé que l'on peut commuter entre un courant de soudage (1 max) d'intensité électrique maximale pour fondre l'électrode (6) et un courant de repos (1 min) de faible intensité électrique pour maintenir un arc électrique, la commutation ayant lieu en fonction de la tension dans l'arc et d'une tension de référence supérieure ($U_{oref}$), caractérisé en ce qu'on peut prescrire, en plus, une tension de référence inférieure ($U_{uref}$), la commutation ayant lieu sur le courant de soudage constant (1 max) lorsque la valeur de la tension dans l'arc atteint la tension de référence inférieure ($U_{uref}$) et sur le courant de repos (1 min) lorsqu'elle atteint la tension de référence supérieure ($U_{oref}$).

2. Procédé selon la revendication 1, caractérisé en ce que l'on règle le courant de repos (1 min) sur une intensité pour laquelle il ne se produit pas de fusion.

3. Dispositif de soudage métallique à l'arc électrique, comportant une électrode fusible à apport réglé, en particulier à vitesse d'alimentation constante, comportant une source de courant constant que l'on peut commuter entre un courant de soudage (1 max) d'intensité électrique élevée pour fondre l'électrode (6) et un courant de repos (1 min) d'une faible intensité électrique pour maintenir l'arc électrique, comportant un agencement de réglage auquel peut être appliqué le signal d'un comparateur au moyen duquel la tension dans l'arc est comparée à une tension de référence supérieure ($U_{oref}$), caractérisé en ce qu'il est prévu un autre comparateur (11) au moyen duquel la tension dans l'arc est comparée à une tension de référence inférieure ($U_{uref}$), et en ce que, lorsque le comparateur (11) réagit pour la tension de référence inférieure ($U_{uref}$), la source de courant commute sur le courant de soudage (1 max), tandis que, lorsque le comparateur (12) réagit sur la tension de référence supérieure ($U_{oref}$), la source de courant commute sur le courant de repos (1 min).

4. Dispositif selon la revendication 3, caractérisé en ce que les sorties des comparateurs (11, 12) à chacune des entrées inverseuses duquel se trouve un diviseur de tension recevant d'une part la tension dans l'arc et, d'autre part, l'une des deux tensions de référence ($U_{uref}$, $U_{oref}$), sont reliées, par l'intermédiaire de diodes (19, 22) polarisées en sens inverse, à l'entrée d'un inverseur bistable (21, 25) pour la source de courant constant (10, 28).

5. Dispositif selon la revendication 3 ou 4, caractérisé en ce que la source de courant constant (28) est une source de courant à caractéristique courant-tension statique, un interrupteur électrique (29) pourvu d'une résistance en shunt (30) étant prévu dans la ligne d'alimentation en courant du chalumeau de soudage (5).

6. Dispositif selon l'une des revendications 3 à 5, caractérisé en ce que les deux tensions de référence ($U_{uref}$, $U_{oref}$) peuvent être réglées indépendamment l'une de l'autre au moyen de potentiomètres (17, 18).

0 095 056

FIG. 1

FIG.2

FIG.3

FIG. 4

FIG.5

0 095 056

FIG. 6